# EUROPÄISCHE PATENTSCHRIFT

(11) **EP 3 850 222 B1**
(45) Veröffentlichungstag und Bekanntmachung des Hinweises auf die Patenterteilung: **03.12.2025**
(21) Anmeldenummer: 19769446.6
(22) Anmeldetag: 13.09.2019
(51) Int. Cl.: F04D 29/62, F04D 29/66, F16F 1/376, F16F 1/373, F16F 3/093, H02K 5/24, H02K 7/14

(54) **LUFTABSAUGVORRICHTUNG, SCHWINGUNGSDÄMPFER UND VERFAHREN ZUR BEFESTIGUNG EINES SCHWINGUNGSINDUZIERENDEN TEILS AN EINER WANDUNG ALS AUCH VERWENDUNG EINES SCHWINGUNGSDÄMPFERS**
AN AIR SUCTION DEVICE, A VIBRATION DAMPER AND A PROCEDURE FOR ATTACHING A VIBRATING PART TO A WALL, AS WELL AS THE USE OF A VIBRATION DAMPER
APPAREIL D'ASPIRATION D'AIR, AMORTISSEUR DE VIBRATIONS ET PROCÉDÉ DE FIXATION D'UN ÉLÉMENT VIBRANT À UNE PAROI, AINSI QUE L'USAGE D'UN AMORTISSEUR DE VIBRATIONS

(30) Priorität: 13.09.2018 DE 102018122450
(43) Veröffentlichungstag der Anmeldung: 21.07.2021
(73) Patentinhaber: Caso Holding GmbH, 59757 Arnsberg (DE)
(72) Erfinder: BERLING, Udo, 48496 Hopsten (DE)
(74) Vertreter: Geskes, Christoph
(86) Internationale Anmeldenummer: PCT/EP2019/074475
(87) Internationale Veröffentlichungsnummer: WO 2020/053382

(56) Entgegenhaltungen:
- EP-A1- 0 668 650
- EP-A1- 2 466 147
- DE-C- 970 885
- FR-A1- 3 047 125
- KR-B1- 100 767 118
- US-A1- 2015 155 756

## Beschreibung

Die Erfindung betrifft eine Luftabsaugvorrichtung umfassend ein Gehäuse mit mindestens einer Wandung und mindestens einem schwingungsinduzierenden Teil. Weiterhin betrifft die Erfindung einen Schwingungsdämpfer zur Verwendung in der Luftabsaugvorrichtung, ein Verfahren zur Befestigung eines schwingungsinduzierenden Teils an einer Wandung und eine Verwendung eines Schwingungsdämpfers.

US 9,958,025 B2 beschreibt ein vibrationssicheres Teil zur Montage eines Lüfters. Hierbei wird mittels einer Gummihülse, die in eine Befestigungsplatte gesetzt wird, ein Bolzen schwingungsentkoppelt.

EP 0 668 650 A1 offenbart eine Anordnung zur schwingungsgedämpften Halterung eines Elektromotors, insbesondere eines Lüftermotors.

DE 970 885 C offenbart eine elastische Aufhängung eines ein Gebläse antreibenden Elektromotors, insbesondere für Staubsauger.

EP 2 466 147 A1 offenbart eine weitere bekannte schwingungsgedämpfte Halterung eines Elektromotors.

Nachteilig an dem aus dem Stand der Technik bekannten Schwingungsdämpfer ist, dass dieser sehr viele Teile aufweist und dadurch teuer insbesondere in der Montage ist und weiterhin nur eine unzureichende Schwingungsentkoppelung zwischen dem schwingungsindizierenden Gebläse und einer Wandung bewirkt.

Aufgabe der vorliegenden Erfindung ist es, eine verbesserte Luftabsaugvorrichtung, einen verbesserten Schwingungsdämpfer und ein verbessertes Verfahren zur Befestigung eines schwingungsindizierenden Teils einer Wandung bereit zu stellen, die insbesondere die Nachteile des bekannten Standes der Technik überkommt. Insbesondere ist Aufgabe der Erfindung, eine platzsparende Möglichkeit der Montage eines schwingungsinduzierenden Teils bereit zu stellen, welche eine Schwingungsentkopplung beziehungsweise eine Schwingungsdämpfung in einer Luftabsaugvorrichtung bewirkt.

Die Aufgabe wird erfindungsgemäß gelöst mittels einer Luftabsaugvorrichtung umfassend ein Gehäuse mit mindestens einer Wandung und mindestens einem schwingungsinduzierenden Teil, wobei die Luftabsaugvorrichtung mindestens einen Schwingungsdämpfer umfasst, der zwischen dem schwingungsinduzierenden Teil und der Wandung anordenbar ist, wobei der mindestens eine Schwingungsdämpfer einen elastomeren Körper umfasst, wobei der Körper eine Mehrzahl von ersten Ausnehmungen und eine Mehrzahl von zweiten Ausnehmungen umfasst, wobei der elastomere Körper einen zylindrischen oder prismatischen Mittelteil und eine Mehrzahl von Ausprägungen aufweist, wobei die Ausprägungen radial außen am Mittelteil auf dessen Mantelfläche angeordnet wobei der Körper zumindest eine erste Seite und eine dieser gegenüberliegende zweite Seite aufweist, wobei zumindest eine Oberfläche des Mittelteils der ersten Seite und der zweiten Seite zu einer Oberfläche zumindest einer Ausprägung der gleichen Seite abgesetzt ist, wobei das Mittelteil die Ausprägungen auf der ersten Seite überragt und die Ausprägungen das Mittelteil auf der zweiten Seite überragen, und wobei in den Ausprägungen die zweiten Ausnehmungen angeordnet sind, wobei die ersten Ausnehmungen zur Aufnahme von ersten Anbindungsmitteln für eine Anbindung an die zumindest eine Wandung und die zweiten Ausnehmungen zur Aufnahme von zweiten Anbindungsmitteln für eine Anbindung an dem schwingungsinduzierendem Teil ausgestaltet sind.

Weiterhin wird die Aufgabe erfindungsgemäß mittels eines Schwingungsdämpfers zur Verwendung in der Luftabsaugvorrichtung umfassend einen elastomeren Körper gelöst, wobei der Körper eine Mehrzahl von ersten Ausnehmungen und eine Mehrzahl von zweiten Ausnehmungen umfasst, wobei der elastomere Körper einen zylindrischen oder prismatischen Mittelteil und eine Mehrzahl von Ausprägungen aufweist, wobei die Ausprägungen radial außen am Mittelteil auf dessen Mantelfläche angeordnet wobei der Körper zumindest eine erste Seite und eine dieser gegenüberliegende zweite Seite aufweist, wobei zumindest eine Oberfläche des Mittelteils der ersten Seite und/oder der zweiten Seite zu einer Oberfläche zumindest einer Ausprägung der gleichen Seite abgesetzt ist wobei das Mittelteil die Ausprägungen auf der ersten Seite überragt und die Ausprägungen das Mittelteil auf der zweiten Seite überragen, und wobei in den Ausprägungen die zweiten Ausnehmungen angeordnet sind, wobei die ersten Ausnehmungen zur Aufnahme von ersten Anbindungsmitteln für eine Anbindung an zumindest eine Wandung ausgestaltet sind und die zweiten Ausnehmungen zur Aufnahme von zweiten Anbindungsmitteln für mindestens ein schwingungsinduzierendes Teil ausgestaltet sind.

Weiterhin wird die Aufgabe erfindungsgemäß gelöst mittels eines Verfahrens zur Befestigung eines schwingungsinduzierenden Teils an einer Wandung umfassend
- Bereitstellen eines Schwingungsdämpfers,
- Befestigung von ersten Anbindungsmitteln an mindestens einer Wandung eines Gehäuses einer Luftabsaugvorrichtung und in ersten Ausnehmungen des Schwingungsdämpfers,
- Befestigen von zweiten Anbindungsmitteln an mindestens einem schwingungsinduzierenden Teil und in zweiten Ausnehmungen des Schwingungsdämpfers.

Es wird eine Luftabsaugvorrichtung vorgeschlagen, die ein Gehäuse mit mindestens einer Wandung und mindestens einem schwingungsinduzierendem Teil umfasst. Das schwingungsinduzierende Teil ist insbesondere ein Motor, der bevorzugt an ein Lüfterrad gekoppelt ist. Entweder der Motor und/oder das Lüfterrad können eine Unwucht aufweisen, die eventuell zu ungewünschten Schwingungen führen. Um diese Schwingungen von dem Gehäuse der Luftabsaugvorrichtung zu entkoppeln, wird vorgeschlagen, dass die Luftabsaugvorrichtung mindestens einen Schwingungsdämpfer umfasst, der zwischen dem schwingungsinduzierenden Teil und der Wandung anordenbar ist wobei der elastomere Körper einen zylindrischen oder prismatischen Mittelteil und eine Mehrzahl von Ausprägungen aufweist, wobei die Ausprägungen radial außen am Mittelteil angeordnet und in den Ausprägungen die zweiten Ausnehmungen auf dessen Mantelfläche angeordnet sind. Der Körper weist zumindest eine erste Seite und eine dieser gegenüberliegende zweite Seite auf, wobei zumindest eine Oberfläche des Mittelteils der ersten Seite und der zweiten Seite zu einer Oberfläche zumindest einer Ausprägung der gleichen Seite abgesetzt ist, wobei das Mittelteil die Ausprägungen auf der ersten Seite überragt und die Ausprägungen das Mittelteil auf der zweiten Seite überragen. Der mindestens eine Schwingungsdämpfer umfasst einen elastomeren Körper, wobei der Körper eine Mehrzahl von ersten Ausnehmungen und eine Mehrzahl von zweiten Ausnehmungen umfasst. Die ersten Ausnehmungen sind zur Aufnahme von ersten Anbindungsmitteln für eine Anbindung an die zumindest eine Wandung ausgestaltet. Die zweiten Ausnehmungen sind zur Aufnahme von zweiten Anbindungsmitteln für eine Anbindung an dem schwingungsinduzierenden Teil ausgestaltet.

Die Luftabsaugvorrichtung ist vorzugsweise als eine Dunstabzugsvorrichtung ausgestaltet, die einem Kochfeld zuordenbar ist. Bevorzugt können mittels der Luftabsaugvorrichtung Kochwrasen abgesaugt werden. In einer Ausführungsform ist die Luftabsaugvorrichtung in einer Dunstabzugshaube angeordnet, die über einem Kochfeld anordenbar ist. In einer weiteren Ausführungsform ist die Luftabsaugvorrichtung unterhalb des Kochfeldes angeordnet, insbesondere so, dass Kochwrasen unterhalb des Kochfeldes abziehbar sind.

Mittels des Schwingungsdämpfers wird das schwingungsinduzierende Teil vorteilhaft von der Wandung des Gehäuses und damit vom Gehäuse entkoppelt. Insbesondere wird eine Schwingungsentkoppelung zwischen Wandung und schwingungsinduzierendem Teil durch den Schwingungsdämpfer erreicht.

Bevorzugt sind die Kochwrasen mittels des Lüfterrads, das von dem Motor angetrieben ist, ansaugbar. Der Motor mit dem Lüfterrad kann in einer Ausführungsform derart ausgestaltet sein, dass entweder Motor und/oder Lüfterrad oder deren Zusammenbau nicht exakt austariert sind und beim Betrieb der Luftabsaugvorrichtung in Schwingung geraten. Übertragen sich die Schwingungen auf das Gehäuse der Luftabsaugvorrichtung kommt es zu einer ungewollten Geräuschentwicklung. Der vorgeschlagene Schwingungsdämpfer in der Luftabsaugvorrichtung entkoppelt die Schwingungen des schwingungsinduzierenden Teils, sprich des Motors mit dem Lüfterrad, und vermeidet somit eine Geräuschentwicklung in einer Küche, in der die Luftabsaugvorrichtung zum Einsatz kommt.

Der Schwingungsdämpfer weist den elastomeren Körper auf. Weiterhin weist der elastomere Körper Ausnehmungen auf. Erste Ausnehmungen sind derart gestaltet, dass diese insbesondere erste Anbindungsmittel aufnehmen können. Die ersten Anbindungsmittel sind insbesondere derart ausgestaltet, dass diese den elastomeren Körper mit der Wandung des Gehäuses verbinden können. Beispielsweise sind die ersten Anbindungsmittel als Schrauben oder Bolzen ausgestaltet. In einer Ausgestaltung weisen die ersten Anbindungsmittel schwingungsdämpfende Mittel, beispielsweise Gummidämpfer auf. Die Schwingungsdämpfungsmittel können insbesondere ausgestaltet sein als Gummimetallschwingungsdämpfer beziehungsweise Gummimetallpuffer.

Die ersten Ausnehmungen sind insbesondere im Wesentlichen kreisförmig im Körper angeordnet. Insbesondere sind die Mittelpunkte oder Mittelachsen der ersten Ausnehmungen auf einem ersten Kreisumfang angeordnet, der beispielsweise einer ersten Oberfläche einer ersten Seite des elastomeren Körpers, vorzugsweise des Mittelteils, zugeordnet ist. Bevorzugt ist der erste Kreisumfang konzentrisch zu einer Mittelachse des Mittelteils ausgebildet. Insbesondere sind alle ersten Ausnehmungen, insbesondere deren Mittelpunkte, gleich weit von einem Punkt, bevorzugt einem Mittelpunkt, der Mittelachse und/oder einem geometrischen Schwerpunkt des elastomeren Körpers beabstandet. Weiter bevorzugt ist vorgesehen, dass die ersten Ausnehmungen gleichmäßig insbesondere auf dem ersten Kreisumfang verteilt sind. Hierdurch wird insbesondere erreicht, dass der elastomere Körper mit gleichmäßigem Anpressdruck an der Wandung anliegt.

Der Begriff "im Wesentlichen" gibt einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

In einer weiteren Ausgestaltung ist vorgesehen, dass die Anordnung der ersten Ausnehmungen an insbesondere geometrische Vorgaben durch die Wandung angepasst ist.

In einer bevorzugten Ausgestaltung weist der elastomere Körper etwa zwei bis etwa zehn, bevorzugt etwa zwei bis etwa vier, weiter bevorzugt etwa drei bis etwa vier, weiter bevorzugt genau vier erste Ausnehmungen auf. In einer weiteren Ausgestaltung ist vorgesehen, dass eine Mehrzahl von ersten Ausnehmungen vorgesehen ist, wobei von diesen nur etwa drei bis etwa vier Ausnehmungen, weiter bevorzugt genau drei oder genau vier ersten Ausnehmungen ein erstes Anbindungsmittel aufnehmen.

Wird im Rahmen der Erfindung "etwa" zusammen mit Werten oder Wertebereichen verwendet, so ist darunter ein Toleranzbereich zu verstehen, den der Fachmann auf diesem Gebiet für üblich erachtet, insbesondere ist einen Toleranzbereich von +/- 20 %, bevorzugt +/- 10 %, weiter bevorzugt +/-5 % vorgesehen. Soweit verschiedene Wertebereiche, beispielsweise bevorzugte und weiter bevorzugte Wertebereiche, in der vorliegenden Erfindung in Bezug auf gleiche Merkmale angegeben sind, sind die Untergrenzen und die Obergrenzen der verschiedenen Wertebereiche miteinander kombinierbar.

Der elastomere Körper weist des Weiteren zweite Ausnehmungen auf. Die zweiten Ausnehmungen sind derart ausgestaltet, dass diese zweite Anbindungsmittel aufnehmen können. Die zweiten Anbindungsmittel sind insbesondere Mittel zur Anbindung des elastomeren Körpers an das schwingungsinduzierende Teil, insbesondere einen Motor. Bevorzugt sind die zweiten Anbindungsmittel ausgestaltet als Schrauben oder Bolzen. In einer Ausgestaltung weisen die zweiten Anbindungsmittel schwingungsdämpfende Mittel, beispielsweise Gummidämpfer, auf.

Die zweiten Ausnehmungen sind in einer Ausführungsform im Wesentlichen kreisförmig im elastomeren Körper angeordnet. Bevorzugt liegen die Mittelpunkte der zweiten Ausnehmungen auf einem zweiten Kreisumfang, der beispielsweise zumindest teilweise auf einer ersten Oberfläche einer ersten Seite des elastomeren Körpers und in einer Ausführungsform zumindest auf einer Ausprägung angeordnet ist. Insbesondere sind alle zweiten Ausnehmungen, insbesondere deren Mittelpunkte, gleich weit von einem Punkt, bevorzugt einem Mittelpunkt, der Mittelachse und/oder einem geometrischen Schwerpunkt des elastomeren Körpers beabstandet. Bevorzugt ist der zweite Kreisumfang konzentrisch zur Mittelachse des Mittelteils ausgebildet. Weiter bevorzugt ist der zweite Kreisumfang konzentrisch zum ersten Kreisumfang. Weiterhin ist vorgesehen, dass die zweiten Ausnehmungen insbesondere auf dem zweiten Kreisumfang gleichmäßig im elastomeren Körper verteilt sind. In einer Ausführungsform ist vorgesehen, dass der zweite Kreisumfang, auf dem die zweiten Ausnehmungen angeordnet sind, identisch ist mit dem ersten Kreisumfang beziehungsweise einen gleichen Radius aufweist, auf den die ersten Ausnehmungen angeordnet sind. Insbesondere sind alle zweiten Ausnehmungen und alle ersten Ausnehmungen, insbesondere deren Mittelpunkte, gleich weit von einem Punkt, bevorzugt einem Mittelpunkt, der Mittelachse und/oder einem geometrischen Schwerpunkt des elastomeren Körpers beabstandet. In einer alternativen, bevorzugten Ausführungsform ist vorgesehen, dass der zweite Kreisumfang, auf dem die zweiten Ausnehmungen angeordnet sind, größer ist beziehungsweise einen größeren Radius aufweist als der erste Kreisumfang, auf dem die ersten Ausnehmungen angeordnet sind. Insbesondere sind alle zweiten Ausnehmungen, insbesondere deren Mittelpunkte, weiter von einem Punkt, bevorzugt einem Mittelpunkt, der Mittelachse und/oder einem geometrischen Schwerpunkt des elastomeren Körpers beabstandet als die ersten Ausnehmungen, insbesondere deren Mittelpunkte. In einer alternativen dritten Ausführungsform ist vorgesehen, dass der Kreisumfang, auf dem die zweiten Ausnehmungen angeordnet sind, kleiner ist beziehungsweise einen kleinen Radius aufweist als der Kreisumfang auf dem die ersten Ausnehmungen angeordnet sind. Insbesondere sind alle ersten Ausnehmungen, insbesondere deren Mittelpunkte, weiter von einem Punkt, bevorzugt einem Mittelpunkt, der Mittelachse und/oder einem geometrischen Schwerpunkt des elastomeren Körpers beabstandet als die zweiten Ausnehmungen, insbesondere deren Mittelpunkte. Die Anordnung der zweiten Ausnehmungen ist bevorzugt an die Vorgaben durch das schwingungsinduzierende Teil angepasst. In einer bevorzugten Ausgestaltung ist vorgesehen, dass der elastomere Körper etwa zwei bis etwa zehn, bevorzugt etwa zwei bis etwa vier, weiter bevorzugt etwa drei bis etwa vier, weiter bevorzugt genau drei zweite Ausnehmungen aufweist. Der Vorteil von drei Ausnehmungen und damit auch der Vorsehung von drei zweiten Anbindungsmitteln ist, dass Verspannungen des schwingungsinduzierenden Teils durch die Anbindung des elastomeren Körpers reduziert werden. In einer beispielhaften Ausgestaltung ist vorgesehen, dass der elastomere Körper genau drei Ausnehmungen aufweist, die bevorzugt gleichmäßig auf dem zweiten Kreisumfang verteilt sind, der weiter bevorzugt konzentrisch zur Mittelachse des Mittelteils angeordnet ist. In einer weiteren Ausgestaltung ist vorgesehen, dass eine Mehrzahl von zweiten Ausnehmungen vorgesehen ist, wobei von diesen nur etwa drei bis etwa vier zweite Ausnehmungen, weiter bevorzugt genau drei zweite Ausnehmungen ein zweites Anbindungsmittel aufnehmen. In einer weiteren Ausgestaltung ist vorgesehen, dass die zweiten Ausnehmungen, insbesondere die genau drei zweiten Ausnehmungen, auf einem gleichseitigen Dreieck, insbesondere in den Kanten eines gleichseitigen Dreieckes, angeordnet sind.

Die zweiten Ausnehmungen und/oder die ersten Ausnehmungen sind in einer Ausgestaltung als Bohrungen ausgestaltet. In einer weiteren Ausgestaltung sind die ersten Ausnehmungen und/oder die zweiten Ausnehmungen als Langlöcher ausgestaltet. Bevorzugt sind die ersten Ausnehmungen und/oder die zweiten Ausnehmungen von einem Material des elastomeren Körpers vollständig umgeben.

Der elastomere Körper weist erfindungsgemäß eine erste Seite und eine dieser gegenüberliegende zweite Seite auf. Besonders bevorzugt ist vorgesehen, dass die erste Seite der Wandung des Gehäuses der Luftabsaugvorrichtung zuordenbar ist. Weiter bevorzugt ist, dass die zweite Seite dem schwingungsinduzierenden Teil zuordenbar ist. In einer Ausgestaltung ist vorgesehen, dass der Körper im Wesentlichen kreisförmig oder ringförmig ausgestaltet ist. In einer besonders bevorzugten Ausgestaltung ist vorgesehen, dass der elastomere Körper einen Mittelteil aufweist. Das Mittelteil kann kreisförmig ausgestaltet, rechteckig ausgestaltet und/oder an die Wandung und/oder an das schwingungsinduzierende Teil angepasst sein. Insbesondere ist das Mittelteil an eine Oberflächenbeschaffenheit beziehungsweise eine geometrischen Vorgabe durch die Wandung und/oder das schwingungsinduzierende Teil angepasst. Bevorzugt ist das Mittelteil in einer Aufsicht ringförmig ausgestaltet. Im Sinne der Erfindung ist unter einer Ringform eine Fläche zu verstehen, die zwischen zwei geometrischen Figuren gelegen ist, die im Wesentlichen konzentrisch angeordnet sind. Insbesondere ist eine Ringform ein Kreisring. Im Sinne der Erfindung ist des Weiteren vorgesehen, dass, wenn von einer Ringform des Körpers oder des Mittelteils die Rede ist, diese einen Hohlzylinder einschließt, der insbesondere eine Höhe aufweist, die geringer ist als ein Außenradius desselben. Unter Zylinder im Allgemeinen kann auch ein Prisma verstanden sein. So kann in einer beispielhaften Ausführungsform vorgesehen sein, dass der Körper, weiter bevorzugt das Mittelteil, als Prisma ausgestaltet ist, das bevorzugt eine zentrale Ausnehmung aufweist. Das Mittelteil weist bevorzugt eine zentrale Ausnehmung auf, die beispielsweise kreisförmig, oval, sternförmig oder rechteckig ausgestaltet ist. Die zentrale Ausnehmung ist insbesondere durchgehend ausgestaltet, und weiter bevorzugt kreisförmig. Vorteil der zentralen Ausnehmung ist, dass sich das Mittelteil bei Eintragung von Schwingungen stärker verformen kann als bei einer Ausführung aus Vollmaterial. Dies wirkt sich positiv aus die Dämpfungseigenschaften des Mittelteils aus.

In einer weiteren Ausgestaltung ist vorgesehen, dass das Mittelteil die ersten Ausnehmungen aufweist. In einer weiteren Ausführungsform ist vorgesehen, dass das Mittelteil die zweiten Ausnehmungen aufweist. In einer bevorzugten Ausgestaltung ist vorgesehen, dass das Mittelteil nur die ersten Ausnehmungen aufweist.

Weiterhin weist das Mittelteil in einer Ausgestaltung eine erste Oberfläche auf. Die erste Oberfläche ist bevorzugt auf der ersten Seite angeordnet. Weiterhin bevorzugt wird die erste Oberfläche begrenzt durch eine umlaufende erste Kante. In einer weiteren Ausführungsform ist vorgesehen, dass die erste Oberfläche im Wesentlichen eben ist. In einer weiteren Ausführungsform ist vorgesehen, dass die erste Oberfläche im Wesentlichen gewölbt ausgestaltet ist. In einer weiteren Ausführungsform ist vorgesehen, dass die erste Oberfläche eine Struktur aufweist, beispielsweise ein Muster, eine Aufrauhung und/oder ein Mattierung. In einer weiteren Ausführungsform ist die erste Oberfläche glatt. In einer weiteren Ausführungsform ist vorgesehen, dass das Mittelteil eine zweite Oberfläche aufweist. Die zweite Oberfläche ist insbesondere auf der zweiten Seite des Mittelteils angeordnet. Die zweite Oberfläche ist bevorzugt begrenzt durch eine umlaufende zweite Kante. Weiter bevorzugt ist vorgesehen, dass die zweite Oberfläche im Wesentlichen eben oder gewölbt ausgestaltet ist. In einer weiteren Ausführungsform ist vorgesehen, dass die zweite Oberfläche eine Struktur aufweist, beispielsweise ein Muster, eine Aufrauhung und/oder ein Mattierung. In einer weiteren Ausführungsform ist die zweite Oberfläche glatt. Des Weiteren ist in einer Ausführungsform vorgesehen, dass das Mittelteil eine Mantelfläche aufweist. Die Mantelfläche ist begrenzt durch die erste und die zweite Oberfläche, also zwischen diesen angeordnet. Weiterhin ist vorgesehen, dass die Mantelfläche begrenzt ist durch die die erste Oberfläche begrenzende erste Kante und die die zweite Oberfläche begrenzende zweite Kante.

In einer weiteren Ausführungsform ist vorgesehen, dass der elastomere Körper zumindest eine Ausprägung, weiter bevorzugt eine Mehrzahl von Ausprägungen aufweist. Bevorzugt weist der elastomere Körper eine etwa zwei bis etwa zehn, weiter bevorzugt etwa zwei bis etwa vier, weiter bevorzugt etwa drei bis etwa vier, weiter bevorzugt genau drei Ausprägungen auf. In einer weiteren Ausführungsform ist vorgesehen, dass die Ausprägungen die zweiten Ausnehmungen aufweisen. Weiter ist in einer Ausführungsform vorgesehen, dass jede Ausprägung eine zweite Ausnehmung, weiter bevorzugt genau eine zweite Ausnehmung aufweist. Erfindungsgemäß ist vorgesehen, dass der Körper ein Mittelteil und eine Mehrzahl von Ausprägungen aufweist, wobei in den Ausprägungen die zweiten Ausnehmungen angeordnet sind. Die Ausprägungen weisen bevorzugt eine Außenkontur auf, die als zylindrisch, prismenförmig und/oder quaderförmig beschrieben sein kann. In einer weiteren Ausführungsform weist die Ausprägung eine beliebige Außenkontur auf. Die Ausprägungen sind weiter bevorzugt auf der Mantelfläche des Mittelteils angeordnet. Bevorzugt umfasst die Mantelfläche des elastomeren Körpers die Mantelflächen der Ausprägung und die Mantelfläche des Mittelteils. Beispielsweise weist die Ausprägung eine im Wesentlichen zylindrische Grundform auf. Bevorzugt grenzt eine Mantelfläche der zylindrischen Grundform an die Mantelfläche des Mittelteils, bevorzugt ist die Grundform der Ausprägung tangierend mit dem Mittelteil, insbesondere mit dessen Mantelfläche ausgestaltet. Beispielsweise umfasst die Ausprägung eine Materialzugabe, die die insbesondre zylindrische Grundform an das Mittelteil anbindet. Bevorzugt ist durch die Materialzugabe ein Übergang von einem Teil der Mantelfläche der Ausprägung in eine Mantelfläche des Mittelteils gegeben. Weiter bevorzugt bildet zumindest ein Teil der Mantelfläche der Grundform die Ausprägung und eine Mantelfläche der Materialzugabe eine Mantelfläche der Ausprägung.

In einer Ausführungsform ist vorgesehen, dass die Ausprägungen in die Mantelfläche des Mittelteils übergehen beziehungsweise einen Materialübergang aufweisen. Bevorzugt ist ein Radius zwischen der Mantelfläche des Mittelteils und der Mantelfläche der Ausprägungen vorgesehen. In einer weiteren Ausgestaltung ist vorgesehen, dass die Mantelfläche der Ausprägung und die Mantelfläche des Mittelteils winklig zueinander stehen, so dass insbesondere eine Kante gebildet wird.

In einer Ausführungsform ist vorgesehen, dass die Ausprägungen Einschnürungen aufweisen, die bevorzugt eine Verminderung des Querschnittes der Ausprägungen umfassen. Die Einschnürung einer Ausprägung kann eine Materialminderung sein. Bevorzugt ist die Einschnürung an der Anbindungsstelle zum Mittelteil ausgeführt, weiter bevorzugt ist in einer Ausführungsform vorgesehen, dass die Einschnürungen zwischen der Anbindungsstelle zum Mittelteil und der zweiten Ausnehmung angeordnet ist. Beispielsweise ist die Einschnürung durch die Materialzugabe geformt. Vorteil an der Einschnürung ist, dass dadurch der Dämpfungsfaktor für die in den Schwingungsdämpfer eingebrachte Schwingungen erhöht ist und weiterhin ein Spannungsfluss optimal geführt werden kann. Weiterhin kann die Einschnürung als eine Sollknickstelle ausgeführt sein, um beispielsweise einen Toleranzausgleich für die Anbindung des Schwingungsdämpfers an das schwindungsinduzierende Teil zu ermöglichen. Vorteilhafter Weise mindern die Einschnürungen Spannungen zwischen dem schwingungsinduzierenden Teil und dem Schwingungsdämpfer im montierten Zustand.

In einer bevorzugten Ausführungsform ist vorgesehen, dass die Ausprägung eine erste Oberfläche aufweist. Die erste Oberfläche der Ausprägung ist insbesondere auf der ersten Seite angeordnet. Weiterhin ist die erste Oberfläche der Ausprägung begrenzt durch eine umlaufende erste Kante der Ausprägung und/oder einer Anbindungsstelle an das Mittelteil beziehungsweise durch die Mantelfläche des Mittelteils. Weiter bevorzugt ist vorgesehen, dass die Ausprägung eine zweite Oberfläche aufweist. Bevorzugt ist die zweite Oberfläche auf der zweiten Seite der Ausprägung angeordnet. Weiter bevorzugt ist die zweite Oberfläche begrenzt durch eine umlaufende zweite Kante der Ausprägung und/oder durch eine Anbindungsstelle zum Mittelteil beziehungsweise durch die Mantelfläche des Mittelteils. Sowohl die erste Oberfläche als auch die zweite Oberfläche können eben und/oder gewölbt ausgebildet sei. In einer weiteren Ausführungsform ist vorgesehen, dass die erste und/oder die zweite Oberfläche eine Struktur aufweist, beispielsweise ein Muster, eine Aufrauhung und/oder ein Mattierung. In einer weiteren Ausführungsform ist die erste und/oder die zweite Oberfläche glatt. Zwischen der ersten und der zweiten Oberfläche der Ausprägung ist die Mantelfläche angeordnet. Insbesondere wird die Mantelfläche begrenzt durch die umlaufenden Kanten der ersten und/oder zweiten Oberfläche und/oder durch die Mantelfläche des Mittelteils.

In einer Ausführungsform ist vorgesehen, dass der elastomere Körper zumindest eine erste Seite und eine dieser gegenüberliegende zweite Seite aufweist, wobei eine erste Seite der Ausprägung und eine erste Seite des Mittelteils auf der ersten Seite des Körpers angeordnet sind und eine zweite Seite des Mittelteils und eine zweite Seite der Ausprägung auf der zweiten Seite des Körpers angeordnet sind. Erfindungsgemäß ist vorgesehen, dass zumindest eine erste und/oder zweite Oberfläche des Mittelteils der ersten Seite und der zweiten Seite zu einer Oberfläche zumindest einer Ausprägung, bevorzugt allen Ausprägungen, der jeweils gleichen Seite abgesetzt ist. Insbesondere liegen die Oberflächen der ersten Seite des Mittelteils und der ersten Seite der Ausprägung auf insbesondere nicht identischen planparallelen Ebenen. Insbesondere liegen die Oberflächen der zweiten Seite des Mittelteils und die Oberflächen der zweiten Seite der Ausprägung auf insbesondere nicht identischen planparallelen Ebenen. Weiter bevorzugt liegen die Oberflächen der ersten Seite der Ausprägungen auf einer Ebene. Weiter bevorzugt liegen die Oberflächen der zweiten Seite der Ausprägungen auf einer Ebene. In einer bevorzugten Ausgestaltung ist vorgesehen, dass die erste Oberfläche des Mittelteils abgesetzt zur ersten Oberfläche der Ausprägung ist. Unter einer abgesetzten Anordnung der Oberflächen ist in Sinne der Erfindung zu verstehen, dass die erste Oberfläche des Mittelteils und die erste Oberfläche der Ausprägung und/oder die zweite Oberfläche des Mittelteils und die zweite Oberfläche der Ausprägung nicht in einer Ebene liegen und weiter bevorzugt stufenförmig zueinander angeordnet sind. Beispielsweise ist die erste Oberfläche des Mittelteils höher als die erste Oberfläche der Ausprägung angeordnet, insbesondere wenn die erste Seite nach oben gerichtet ist. Weiterhin beispielhaft kann die zweite Oberfläche der Ausprägung höher angeordnet sein als die zweite Oberfläche des Mittelteiles, insbesondere wenn die zweite Seite nach oben gerichtet ist. In einer bevorzugten Ausgestaltung ist vorgesehen, dass die erste Oberfläche der Ausprägung derart angeordnet ist, insbesondere ist die erste Oberfläche der Ausprägung derart hinter die erste Oberfläche des Mittelteils abgesetzt, dass diese die Wandung im eingebauten Zustand nicht berührt. Weiter bevorzugt ist die Anordnung der ersten Oberfläche des Mittelteils derart zur ersten Oberfläche des Mittelteils abgesetzt, dass auch bei starker Vibration beziehungsweise starkem Eintritt von Schwingung mit hoher Amplitude die Ausprägung nicht die Wandung berührt. Die Ausprägung ist vorzugsweise somit im eingebauten Zustand von der Wandung beabstandet ausgestaltet.

Der Vorteil der vom Mittelteil abgesetzten Ausprägung ist, dass eingebrachte Schwingungen besser gedämpft werden als bei Ausgestaltungen, deren Ausprägungen Oberflächen aufweisen, die im Wesentlichen eben zu derjenigen des Mittelteils angeordnet sind. Auch Schwingungen, die in die Ausprägungen eingebracht werden, werden besser gedämpft als bei Ausgestaltungen, deren Ausprägungen Oberflächen aufweisen, die im Wesentlichen eben zu derjenigen des Mittelteils angeordnet sind.

In einer weiter bevorzugten Ausgestaltung ist vorgesehen, dass die zweite Oberfläche des Mittelteils abgesetzt zur zweiten Oberfläche der Ausprägung ist. Bevorzugt ist vorgesehen, dass die zweite Oberfläche des Mittelteils derart hinter die zweite Oberfläche der Ausprägung abgesetzt ist, dass die zweite Oberfläche des Mittelteils das schwingungsinduzierende Teil im eingebauten Zustand nicht berührt. Insbesondere kommt es auch zu keiner Berührung der zweiten Oberfläche des Mittelteils mit dem schwingungsinduzierenden Teil, wenn starke Vibrationen beziehungsweise Schwingungen in den Schwingungsdämpfer beziehungsweise die zweite Oberfläche der Ausprägung eingetragen werden.

In einer beispielhaften Ausgestaltung weist der Körper auf der Mantelfläche des Mittelteils Ausprägungen auf, insbesondere drei Ausprägungen. Die Ausprägungen weisen beispielsweise eine zylindrische Grundform auf und überragen erfindungsgemäß auf der zweiten Seite das Mittelteil. Auf der ersten Seite sind die Ausprägungen derart an dem Mittelteil angeordnet, dass die erste Oberfläche der Ausprägung zur ersten Oberfläche des Mittelteils zurück versetzt sind - das Mittelteil überragt somit erfindungsgemäß auf der ersten Seite die Ausprägungen. Die zylindrische Grundform der Ausprägung tangiert die Mantelfläche des Mittelteils, wobei eine Materialzugabe zwischen der zylindrischen Grundform der Ausprägung und der Mantelfläche des Mittelteils eine sichere Anbindung von der Ausprägung an das Mittelteil gewährleistet. Insbesondere ist die Materialzugabe Teil der Ausprägung.

Das Material des elastomeren Körpers ist bevorzugt ausgesucht aus einer Gruppe umfassend Kautschuk, Acrylnitril-Butadien-Kautschuk, Gummi und/oder Silikon. Insbesondere weist das Material des elastomeren Körpers einen Härtegrad in einem Bereich von etwa Shore-A 75 bis etwa Shore-A 100, bevorzugt von etwa Shore-A 90, auf.

In einer weiteren Ausführungsform ist vorgesehen, dass der elastomere Körper einen Schichtenaufbau aufweist. Der Schichtenaufbau kann in einer Ausführungsform derart ausgestaltet sein, dass sich Schichten unterschiedlicher Härtegrade aneinander reihen. Insbesondere ist eine Schichtung in Richtung von der ersten, der Wandung zugewandten Seite zur zweiten, dem schwingungsinduzierenden Teil zugewandten Seite vorgesehen. In einer weiteren Ausführungsform ist vorgesehen, dass die Ausprägungen einen anderen Härtegrad aufweisen als das Mittelteil.

Besonders bevorzugt ist vorgesehen, dass der elastomere Körper einstückig aufgebaut ist. insbesondere ist vorgesehen, dass das Mittelteil und die Ausprägung einstückig ausgestaltet sind. Des Weiteren ist bevorzugt vorgesehen, dass der elastomere Körper in einem Produktionsschritt geformt beziehungsweise gegossen ist. In einer weiteren Ausführungsform ist vorgesehen, dass der elastomere Körper maschinell nachbearbeitet ist.

In den Ausnehmungen können in einer Ausführungsform Buchsen angeordnet sein. Bevorzugt sind in den ersten Ausnehmungen Buchsen angeordnet. Weiter bevorzugt sind in den zweiten Ausnehmungen Buchsen angeordnet. In einer Ausführungsform ist vorgesehen, dass Buchsen zumindest teilweise in den ersten Ausnehmungen und/oder in den zweiten Ausnehmungen angeordnet sind. Die Buchsen können vom elastomeren Körper umspritzt sein, das heißt materialverbunden ausgebildet sein. In einer alternativen, bevorzugten Ausführungsform ist vorgesehen, dass die Buchsen in den Körper einsetzbar ausgebildet sind. Insbesondere sind die Buchsen lösbar in den Ausnehmungen angeordnet. Die Buchsen sind derart gestaltet, dass diese aus einem Material gebildet sind, ausgewählt aus einer Gruppe umfassend Metall, insbesondere Aluminium, Kunststoff und/oder Gummi. Insbesondere weisen die Buchsen einen höheren Härtegrad auf als der elastomere Körper. Die Buchsen sind insbesondere zur Kraftübertragung der Anbindungsmittel ausgelegt, so dass mittels der Anbindungsmittel, die eine Kraft in die Buchsen einleiten, der elastomere Körper an der Wandung und/oder dem schwingungsinduzierenden Teil befestigbar ist.

In einer Ausführungsform ist vorgesehen, dass zumindest eine Anzahl der Buchsen aus zumindest einer Oberfläche herausragen. Bevorzugt ragen die Buchsen, die insbesondere in den ersten Ausnehmungen angeordnet sind, über eine zweite Oberfläche des Mittelteils hinaus. Insbesondere sind die Buchsen im Querschnitt T-förmig ausgeführt. Weiter bevorzugt ist der T-Deckstrich der im Querschnitt T-förmig ausgestalteten Buchsen als Lager ausgeführt. Bevorzugt ist der T-Deckstrich ein Kragen. Weiter bevorzugt ist vorgesehen, dass die T-förmig ausgeführten Buchsen gegen ein Herausrutschen der Buche aus dem elastomeren Körper gesichert sind. Weiter bevorzugt sind die Buchsen der ersten Ausnehmung als Gewindebuchsen ausgeführt, in die bevorzugt Bolzen oder Schrauben eingeschraubt werden können.

In einer weiteren Ausführungsform ist vorgesehen, dass die Buchsen keine Oberfläche des elastomeren Körpers überragen. Bevorzugt sind die Buchsen, die in den zweiten Ausnehmungen angeordnet sind, insbesondere plan abschließend mit der ersten und/oder der zweiten Oberfläche der Ausprägung ausgestaltet.

In einer weiteren Ausführungsform ist vorgesehen, dass die Buchsen als Schwingungsdämpfermittel ausgestaltet sind. In einer bevorzugten Ausführungsform ist vorgesehen, dass die schwingungsdämpfende Ausgestaltung der Buchsen innerhalb der ersten und/oder der zweiten Ausnehmungen ausgeführt ist. Bevorzugt weist die Buchse ein schwingungsdämpfendes Material auf, das zusammen mit dem Material des elastomeren Körpers zusammenwirkt. Das schwingungsdämpfende Material weist in einer Ausgestaltung einen geringeren Härtegrad als das Material des elastomeren Körpers auf. Beispielsweise kann die Buchse eine Mehrzahl von Materialien aufweisen, wobei zumindest ein erstes Material härter als das des elastomeren Körpers ist und ein zweites Material weicher als das des elastomeren Körpers ist.

In einer beispielhaften Ausgestaltung umfasst der elastomere Körper einen zylindrischen Mittelteil insbesondere mit einer zentralen Ausnehmung, durch die die Mittelachse verläuft, an dem radial außen eine Anzahl, vorzugsweise drei, Ausprägungen angeordnet sind. Der Mittelteil ist damit bevorzugt in einer Draufsicht als ringförmig anzusprechen oder dreidimensional als Ringzylinder. Bevorzugt sind die Ausprägungen gleichmäßig auf einer Mantelfläche des Mittelteils verteilt angeordnet und weiter bevorzugt mit dem Mittelteil materialverbunden. Die Ausprägungen sind bevorzugt im Wesentlichen zylindrisch ausgestaltet. Insbesondere ist ein Teil der Mantelfläche der Ausprägungen mit der Mantelfläche des zylindrischen Mittelteils des elastomeren Körpers über einen abgerundeten Übergangsbereich verbunden. Bevorzugt sind Oberflächen der Ausprägungen von denen des Mittelteils abgesetzt angeordnet. Bevorzugt ragen die Ausprägungen auf der zweiten Seite des elastomeren Körpers in Längsrichtung über die zweite Seite des Mittelteils. Bevorzugt ragt das Mittelteil auf der ersten Seite des elastomeren Körpers über die erste Seite der Ausprägungen. Das Mittelteil weist eine Anzahl, bevorzugt drei, gleichmäßig um eine Mittelachse des Mittelteils verteilte erste Ausnehmungen auf, die sich bevorzugt parallel zur Mittelachse des Mittelteils vollständig durch dieses auf einem ersten Kreisumfang erstrecken. Die ersten Ausnehmungen sind zur Anbindung des elastomeren Körpers an einer Wandung vorgesehen. Die Ausprägungen weisen jeweils eine zweite Ausnehmung auf, die bevorzugt auf einem zweiten Kreisumfang angeordnet sind, der einen größeren Radius aufweist als der erste Kreisumfang.

Eine beispielhafte Ausführungsform der Luftabsaugvorrichtung weist ein Gehäuse auf, in dem ein schwingungsinduzierendes Teil, das als Motor ausgestaltet ist, angeordnet ist. An dem Motor angebunden ist bevorzugt ein Lüfterrad, das durch den Motor angetrieben wird. Die durch den Motor des Lüfterrads induzierten Schwingungen werden zum Gehäuse hin durch einen Schwingungsdämpfer gedämpft. Der Schwingungsdämpfer ist dabei in der beispielhaften Ausführungsform als Körper mit einem ringförmigen Mittelteil ausgebildet und weist prismenförmige, weiter bevorzugt zylindrische, Ausprägungen auf, die auf der Mantelfläche des Mittelteils angeordnet sind. Es sind drei Ausprägungen auf der Mantelfläche angeordnet, die jeweils genau eine zweite Ausnehmung aufweisen. Das ringförmige Mittelteil weist des Weiteren etwa vier Ausnehmungen auf, die gleichmäßig im Mitteilteil verteilt sind. Die Ausprägungen sind in den Ecken eines gleichseitigen Dreieckes angeordnet, so dass die Anbindung an das schwingungsinduzierende Teil beziehungsweise dem Motor gleichmäßig und insbesondere spannungsfrei erfolgen kann.

Weiterhin beispielhaft weist der Schwingungsdämpfer Buchsen auf, die in den Ausnehmungen angeordnet sind. In den ersten Ausnehmungen sind im Querschnitt T-förmige Gewindebuchsen angeordnet, die einen Kragen aufweisen. Der Kragen verhindert ein Herausrutschen der Buchse insbesondere wenn ein erstes Anbindungsmittel in die Buchse geschraubt ist. Die Anbindungsmittel in den Buchsen der ersten Ausnehmungen binden den Schwingungsdämpfer an die Wandung des Gehäuses der Luftabsaugvorrichtung an. In den zweiten Ausnehmungen sind beispielhaft Buchsen angeordnet, die kein Gewinde aufweisen. Durch diese Buchsen werden zweite Anbindungsmittel gesteckt, die beispielsweise als Schrauben ausgestaltet sind. Die zweiten Anbindungsmittel werden beispielsweise in das schwingungsinduzierende Teil, den Motor beziehungsweise dessen Gehäuse, geschraubt, wobei bevorzugt ein Schraubenkopf auf der ersten Seite auf der Buchse aufliegt. In einer Ausführungsform ist eine Unterlegscheibe vorgesehen, die zwischen erster Oberfläche der Ausprägung beziehungsweise der Buchse und dem Schraubenkopf angeordnet wird. Durch Kraftübertragung vom Schraubenkopf über die Buchse auf das schwingungsinduzierende Teil wird der Schwingungsdämpfer an dem schwingungsinduzierenden Teil angebunden.

Weiterhin wird ein Schwingungsdämpfer zur Verwendung in der oben beschriebenen Luftabsaugvorrichtung vorgeschlagen. Dieser weist einen elastomeren Körper auf. Der Körper umfasst eine Mehrzahl von ersten Ausnehmungen und eine Mehrzahl von zweiten Ausnehmungen, wobei der elastomere Körper einen zylindrischen oder prismatischen Mittelteil und eine Mehrzahl von Ausprägungen aufweist, wobei die Ausprägungen radial außen am Mittelteil angeordnet und in den Ausprägungen die zweiten Ausnehmungen auf dessen Mantelfläche angeordnet sind. Der Körper weist zumindest eine erste Seite und eine dieser gegenüberliegende zweite Seite auf, wobei zumindest eine Oberfläche des Mittelteils der ersten Seite und/oder der zweiten Seite zu einer Oberfläche zumindest einer Ausprägung der gleichen Seite abgesetzt ist wobei das Mittelteil die Ausprägungen auf der ersten Seite überragt und die Ausprägungen das Mittelteil auf der zweiten Seite überragen. Die ersten Ausnehmungen sind ausgestaltet zur Aufnahme von ersten Anbindungsmitteln für eine Anbindung an zumindest eine Wandung. Die zweiten Ausnehmungen sind ausgestaltet zur Aufnahme von zweiten Anbindungsmitteln für eine Anbindung an zumindest ein schwingungsinduzierendes Teil. Bevorzugt ist in einer Ausgestaltung vorgesehen, dass Buchsen in den ersten Ausnehmungen und/oder den zweiten Ausnehmungen angeordnet sind. In einer weiteren Ausführungsform ist vorgesehen, dass die Buchsen als Schwingungsdämpfermittel ausgestaltet sind.

In einer beispielhaften Ausführung des Schwingungsdämpfers ist vorgesehen, dass der Schwingungsdämpfer ein kreisrundes Mittelteil aufweist mit einer zentralen Ausnehmung die rund beziehungsweise kreisrund ausgeführt ist. Auf einem Kreisumfang, der auf einer ersten Oberfläche einer ersten Seite des Mittelteils angeordnet ist, sind durchgehend zu einer zweiten, gegenüberliegenden Oberfläche des Mittelteils erste Ausnehmungen, insbesondere vier erste Ausnehmungen, ausgestaltet, die jeweils eine Buchse aufweisen. Die Buchsen in den ersten Ausnehmungen sind bevorzugt derart ausgeführt, dass diese auf der zweiten, einem Motor zuwendbaren, Seite einen Kragen aufweisen, so dass diese in einem Querschnitt T-förmig ausgestaltet sind. Hierdurch wird erreicht, dass die T-förmigen Buchsen ein Lager bilden und eine Krafteinleitung durch Anbindungsmittel, die innerhalb der Buchsen anordenbar sind, in den elastomeren Körper des Schwingungsdämpfers eingebracht wird. Auf der Mantelfläche des Mittelteils des elastomeren Körpers sind Ausprägungen, bevorzugt drei, angeordnet, die weiter bevorzugt mit dem Mittelteil des elastomeren Körpers materialverbunden sind. Die Ausprägungen weisen jeweils eine zweite Ausnehmung auf, die bevorzugt durchgängig von einer ersten zu einer zweiten Seite der Ausprägungen hin ausgestaltet ist. Innerhalb der zweiten Ausnehmung befinden sich in einer Ausführungsform Buchsen, die bevorzugt nicht über eine erste und eine zweite, der ersten gegenüberliegenden, Oberfläche der Ausprägung herausragen.

Bevorzugt ist vorgesehen, dass die erste Oberfläche der Ausprägung zur ersten Oberfläche des Mittelteils abgesetzt, das heißt, stufenförmig von dieser beabstandet ist. Die erste Oberfläche der Ausprägung ist insbesondere zur ersten Oberfläche des Mittelteils zurückgesetzt. Bevorzugt sind die ersten Oberflächen der Ausprägung parallel zu der ersten Oberfläche des Mittelteils angeordnet. Weiter bevorzugt ist vorgesehen, dass die zweite Oberfläche des Mittelteils zur zweiten Oberfläche der Ausprägung abgesetzt, das heißt, stufenförmig von dieser beabstandet ist. Die zweite Oberfläche des Mittelteils ist insbesondere zur zweiten Oberfläche der Ausprägung zurückgesetzt. Bevorzugt ist die zweite Oberfläche des Mittelteils parallel zu den ersten Oberflächen der Ausprägungen angeordnet.

In einer weiteren bevorzugten Ausgestaltung ist vorgesehen, dass die ersten Oberflächen der Ausprägungen in einer Ebene liegen. In einer weitern Ausgestaltung ist vorgesehen, dass die zweiten Oberflächen der Ausprägungen in einer Ebene liegen.

Weiterhin wird ein Verfahren zur Befestigung eines schwingungsinduzierenden Teils an einer Wandung vorgeschlagen, wobei das Verfahren die Schritte umfasst:
- Bereitstellen eines Schwingungsdämpfers, wie oben beschrieben,
- Befestigen von Anbindungsmitteln an zumindest einer Wandung eines Gehäuses einer Luftabsaugvorrichtung und in der ersten Ausnehmung des Schwingungsdämpfers,
- Befestigen von zweiten Anbindungsmitteln an mindestens einem schwingungsinduzierenden Teil und in zumindest zweiten Ausnehmungen des Schwingungsdämpfers.

In einer bevorzugten Ausgestaltung ist vorgesehen, dass Buchsen in die ersten und/oder die zweiten Ausnehmungen eingebracht werden. Weiter bevorzugt ist vorgesehen, dass die Buchsen als Schwingungsdämpfungsmittel ausgestaltet sind beziehungsweise mit diesen verbunden werden oder diese aufweisen. Bevorzugt wird eine Anbindung an die Wandung und/oder an das schwingungsinduzierende Teil über Schwingungsdämpfungsmittel hergestellt. In einer weiteren Ausführungsform werden als Schwingungsdämpfungsmittel ausgestaltete Anbindungsmittel in die Ausnehmungen und/oder die Buchsen eingebracht. Die Schwingungsdämpfungsmittel können insbesondere ausgestaltet sein als Gummimetallschwingungsdämpfer beziehungsweise Gummimetallpuffer

Weiterhin wird eine Verwendung eines Schwingungsdämpfers wie oben beschrieben vorgeschlagen zur Anbindung mindestens eines schwingungsinduzierenden Teils an mindestens eine Wand eines Gehäuses einer oben beschriebenen Luftabsaugvorrichtung.

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken sondern lediglich auf die in den Figuren gezeigten Ausführungsbeispiele verweisen. Gleiche Teile oder Teile mit gleicher Funktion weisen im Folgenden die gleichen Bezugszeichen auf. Bezugszeichen sind der übersichtshalber exemplarisch aufgeführt, so dass gleiche Teile oder Teile mit gleicher Funktion, die als solche erkennbar sind, nur einmal gekennzeichnet sind. Es zeigen:
- Fig. 1: einen Schwingungsdämpfer in einer Aufsicht auf die zweite Seite;
- Fig. 2: der Schwingungsdämpfer der Fig. 1 in einer Seitenansicht;
- Fig. 3: der Schwingungsdämpfer der Fig. 1 in einer Aufsicht auf die erste Seite;
- Fig. 4: der Schwingungsdämpfer gemäß Fig. 1 in einer perspektivischen Schnittansicht;
- Fig. 5: die Schnittansicht aus Fig. 4 in einer Aufsicht auf den Schnitt;
- Fig. 6: eine Explosionsdarstellung einer Luftabsaugvorrichtung; und
- Fig. 7: eine Schnittansicht einer zusammengebauten Luftsaugvorrichtung.

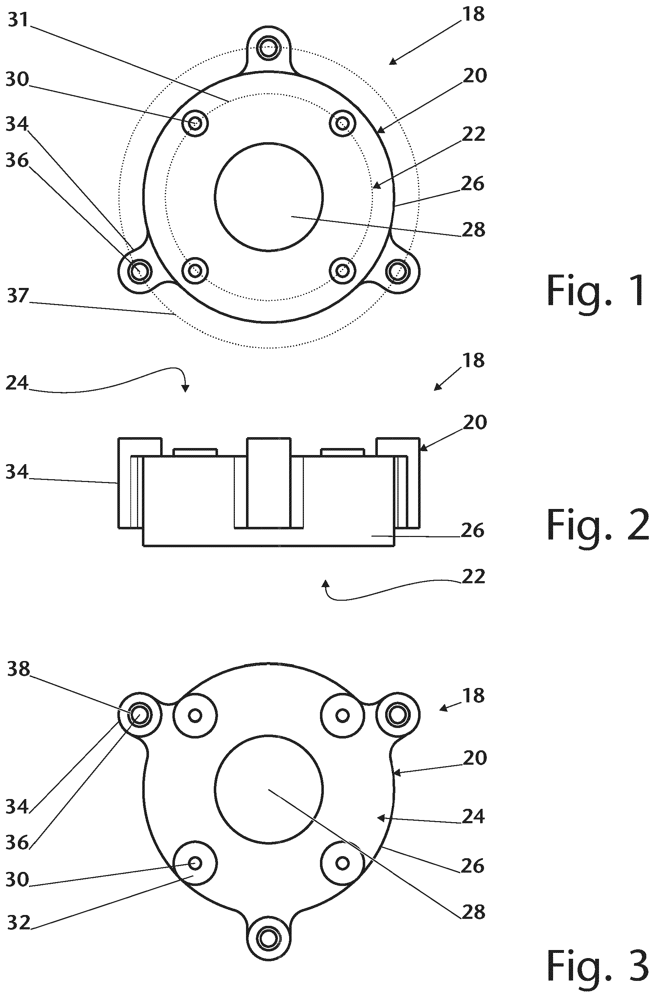

Fig. 1 zeigt einen Schwingungsdämpfer 18 in einer Aufsicht von der ersten Seite 22. Der Schwingungsdämpfer 18 weist einen elastomeren Körper 20 auf, der ein Mittelteil 26 und drei Ausprägungen 34 aufweist. Das Mittelteil 26 ist als Kreisring ausgestaltet wobei eine zentrale Ausnehmung 28 kreisrund ausgeführt ist.

Das Mittelteil weist vier erste Ausnehmungen auf, die gleichmäßig im Mittelteil verteilt sind und auf einem ersten Kreisumfang 31 angeordnet sind. Die Ausprägungen 34 weisen jeweils eine zweite Ausnehmung auf, die insbesondere zentral im zylindrischen Teil der Ausprägungen 34 angeordnet und auf einem zweiten Kreisumfang 37 angeordnet sind.

Fig. 2 zeigt den Schwingungsdämpfer 18 in einer Seitenansicht. Zu erkennen ist, dass der Schwingungsdämpfer 18 eine erste Seite 22 und eine zweite Seite 24 aufweist, wobei das Mittelteil 26 die Ausprägungen 34 auf der ersten Seite 22 erfindungsgemäß überragt. Die Ausprägungen 34 überragen das Mittelteil 18 erfindungsgemäß auf der zweiten Seite 24.

Fig. 3 zeigt den Schwingungsdämpfer 18 in einer Aufsicht von der zweiten Seite 24. In dieser Ansicht ist der elastomere Körper 20 mit dem ringförmigen Mittelteil 26 und den drei Ausprägungen 34 zu erkennen. Weiterhin ist zu erkennen, dass das Mittelteil 26 vier erste Ausnehmungen 30 aufweist in die jeweils Buchsen 32 eingebracht sind. Die Buchsen 32 kragen auf der zweiten Seite 24 radial nach außen, so dass diese ein Widerlager bilden, insbesondere wenn Anbindungsmittel, die insbesondere als Schrauben ausgebildet sein können in die Buchsen 32 eingeschraubt werden.

Auch in die zweiten Ausnehmungen 36 sind zweite Buchsen 38 eingebracht. Wie aus den Figuren 1 und 3 zu erkennen ist, sind die zweiten Buchsen 38 vollständig innerhalb der zweiten Ausnehmungen und ragen nicht über eine der Seiten heraus. Insbesondere schließen die zweiten Buchsen auf der ersten oder der zweiten Seite 22 und 24 insbesondere plan ab.

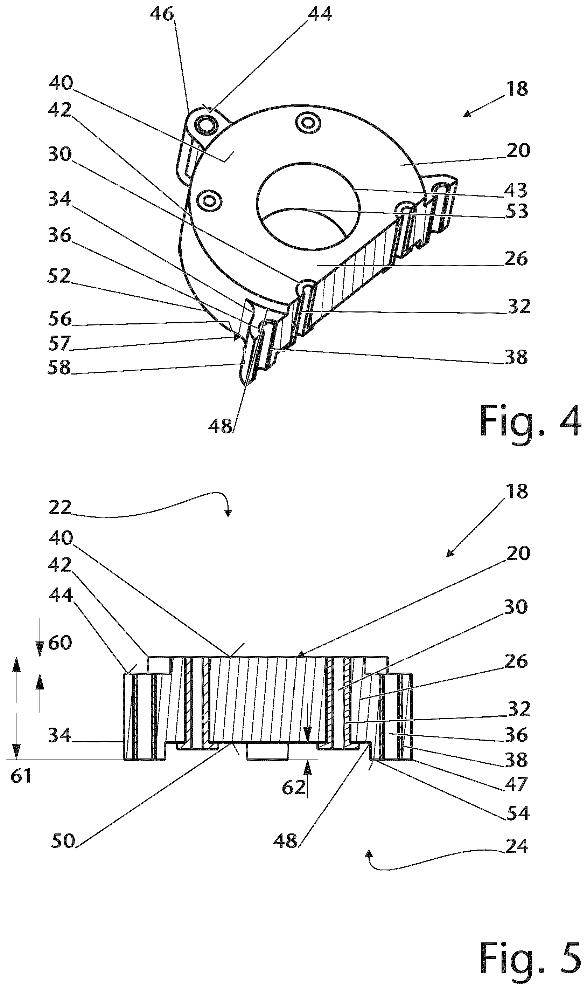

Fig. 4 zeigt eine isometrische Ansicht des Schwingungsdämpfers 18 mit einem Schnitt durch den elastomeren Körper 20. In diesem Schnitt sind insbesondere erste Ausnehmungen 30 und zweite Ausnehmungen 36 geschnitten. Zu erkennen ist, dass in den ersten Ausnehmungen 30 erste Buchsen 32 angeordnet sind und in den zweiten Ausnehmungen 36 zweite Buchsen 38 angeordnet sind. Des Weiteren ist zu erkennen, dass die Ausprägungen 34 erste Oberflächen 44 aufweisen, die jeweils begrenzt sind durch eine erste Kante 46 der Ausprägungen 34. Weiterhin ist die erste Oberfläche 44 der Ausprägung 34 durch eine Anschlussstelle 48 begrenzt, bei der die Ausprägung 34 an eine Mantelfläche 56 des Mittelteils 26 grenzt. Das Mittelteil 26 weist eine erste Oberfläche 40 auf, die durch eine erste umlaufende Kante 42 des Mittelteils 26 begrenzt ist. Die erste Oberfläche 40 des Mittelteils 26 ist weiterhin durch eine erste innenliegende Kante 43 begrenzt. Die Ausprägungen 34 weist des Weiteren eine Mantelfläche 58 auf, die an eine Mantelfläche 56 des Mittelteils 26 grenzt beziehungsweise in diese übergeht. Ein Teil der Mantelfläche 58 der Ausprägungen 34 ist mit der Mantelfläche 56 des zylindrischen Mittelteils 26 über einen abgerundeten Übergangsbereich 57 verbunden.

Fig. 5 zeigt eine Aufsicht auf die Schnittfläche aus Fig. 4. Dieser ist zu entnehmen, dass die erste Oberfläche 44 der Ausprägung 34 auf der ersten Seite 22 zur ersten Oberfläche 40 des Mittelteils 26 um eine erste Höhe 60 zurück versetzt ist. Die Höhe 60 beträgt etwa ein Sechstel der Gesamthöhe 61 des Schwingungsdämpfers 18.

Weiterhin ist auf der zweiten Seite 24 die zweite Oberfläche 50 des Mittelteils 26 um die zweite Höhe 62 zur zweiten Oberfläche 54 der Ausprägung 34 zurück versetzt. Die zweite Höhe 62 beträgt ebenfalls etwa ein Sechstel der Gesamthöhe 61 des Schwingungsdämpfers 18.

Fig. 5 ist des Weiteren die umlaufende Kante 42 zu entnehmen, die die erste Oberfläche 40 des Mittelteils 26 begrenzt. Die Anschlussstelle 48 begrenzt die zweite Oberfläche 50 in Verbindung mit der zweiten umlaufenden Kante 52, die aus Fig. 4 hervorgeht, sowie die zweite innenliegende Kante 53, die ebenfalls aus Fig. 4 hervorgeht. Die zweite Oberfläche 54 der Ausprägung 26 wird durch die umlaufende Kante 47 begrenzt.

Aus Fig. 5 ist des Weiteren zu entnehmen, dass die ersten Ausnehmungen 30 erste Buchsen 32 aufweisen, die in einem Querschnitt T-förmig ausgestaltet sind. Die T-förmige Ausgestaltung führt dazu, dass die ersten Buchsen 32 auf der zweiten Oberfläche 50 des Mittelteils 26 gelagert sind und nicht aus dem Körper 20 in Richtung der ersten Seite 22 herausfallen können. Weiterhin ist durch diese Ausgestaltung der Buchsen 32 gewährleistet, dass eine Zugkraft die durch ein nicht gezeigtes Anbindungsmittel in die Buchse 32 eingebracht wird, welches insbesondere in die Buchse 32 eingeschraubt ist, vorteilhaft auf den elastomeren Körper 20 verteilt wird, ohne dass eine nennenswerte Verformung des Körpers 20 eintritt der Schwingungsdämpfungseigenschaften behindern könnte.

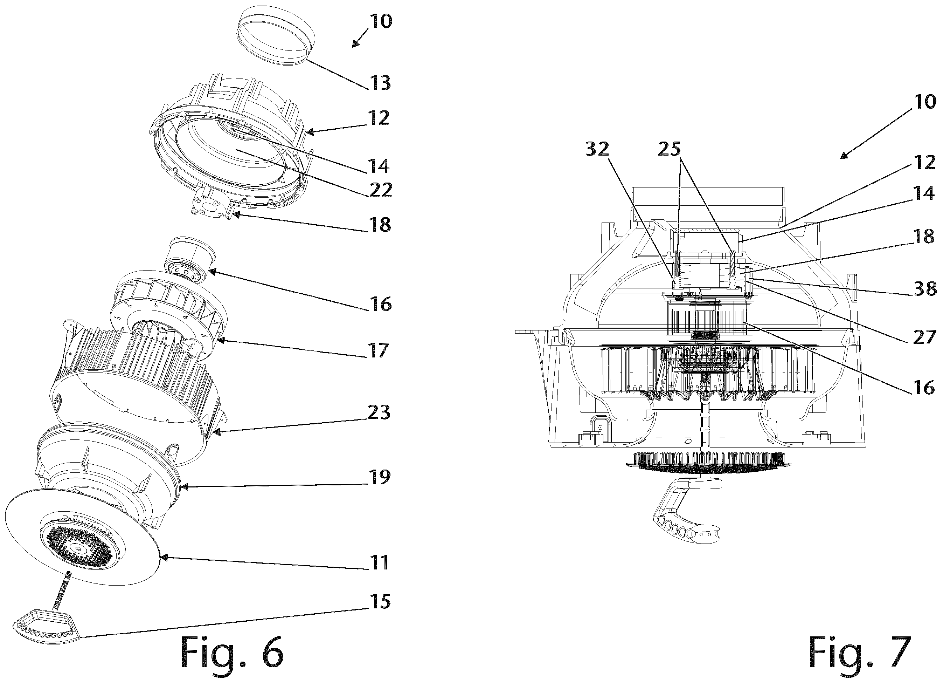

Weiterhin ist aus den Fig. im Allgemeinen klar zu entnehmen, dass ein Schall- beziehungsweise Schwingungsweg zwischen den zweiten Buchsen 38, über die ein Körperschall eines schwingungsinduzierenden Teils eingeleitet werden kann, durch den elastomeren Körper 20 in die erste Buchse 32 übergeht, die in einer Ausführungsform rigide mit der Wandung eines in Fig. 6 dargestellten Gehäuses verbunden ist. Insbesondere durch die Geometrie des elastomeren Körpers, namentlich den Versatz der Ausprägungen 34 zum Mittelteil 26 sowie der elastomeren Ausführungen des Körpers 20, wird eine optimale Schwingungsdämpfung erzeugt.

Hier nicht gezeigt ist die ebenfalls mögliche in der allgemeinen Beschreibung beschriebene Ausführungsform, dass die Buchsen 38 und/oder 32 ebenfalls alternativ oder gemeinsam schwingungsdämpfende Eigenschaften aufweisen und insbesondere als Schwingungsdämpfer ausgestaltet sind. So ist in einer Ausführungsform beispielsweise auch vorgesehen, dass die Buchsen 32 auf der ersten Seite 22 über die Oberfläche 40 hinausragen und insbesondere schwingungsdämpfende Anbindungsmittel aufweisen, die beispielsweise als Gummimetallpuffer oder ähnliches ausgestaltet sind. Auch die Buchsen 38 können über eine zweite Oberfläche 54 der Ausprägungen 34 hinausragen und schwingungsdämpfende Eigenschaften oder schwingungsdämpfende Mittel aufweisen wie beispielsweise Gummimetallpuffer oder ähnliches. Durch diese Ausführungsformen kann noch eine zusätzliche Schwingungsdämpfung, falls dies von Nöten sein sollte, erzielt werden.

Selbstverständlich können auch weitere Ausführungen wie in der allgemeinen Beschreibung beschrieben mit mehr oder weniger ersten Ausnehmungen 30 oder zweiten Ausnehmungen 36 beziehungsweise Ausprägungen 34 vorgesehen sein.

Fig. 6 zeigt eine Luftabsaugvorrichtung 10 mit einer Ansaugdüse 11 und einem Gehäuse 12 in das ein schwingungsinduzierendes Teil 16, das als Motor ausgestaltet ist, eingebracht ist. Zwischen dem schwingungsinduzierenden Teil 16 und dem Gehäuse 12 ist der Schwingungsdämpfer 18 angeordnet. Das als Motor ausgebildete schwingungsinduzierende Teil 16 nimmt ein Lüfterrad 17 auf, welches dazu ausgestaltet ist, Luft durch die Ansaugdüse 11 anzusaugen, die dann über einen Deflektor 21, der in dem Gehäuse 12 angeordnet ist, umzuleiten und durch einen Filter 23 aus der Luftabsaugvorrichtung 10 zu führen. Eine Wanne 19 zur Aufnahme von Kondenswasser ist Teil des Gehäuses 12. Die Luftabsaugvorrichtung 10 kann mittels eines Dichtungsringes 13 an eine hier nicht gezeigte Öffnung zum Auslassen der abgesaugten Luft angeschlossen werden.

Fig. 7 zeigt eine Schnittansicht der Luftabsaugvorrichtung 10 in einem Zusammenbau. Zu erkennen ist, dass erste Anbindungsmittel 25 als Schrauben ausgestaltet sind und in die als Gewindebuchsen ausgestalteten erste Buchsen 32 eingeschraubt sind, um den Schwingungsdämpfer 18 an der Wandung 14 des Gehäuses 12 zu befestigen. Zweite Anbindungsmittel 27, die ebenfalls als Schrauben ausgestaltet sind, sind durch die zweiten Buchsen 38 gesteckt und in hier nicht weiter bezeichnete Innengewinde des schwingungsinduzierenden Teils 16 geschraubt.

Die vorgeschlagene Luftabsaugvorrichtung 10 sowie der vorgeschlagene Schwingungsdämpfer 18 haben den großen Vorteil, dass Geräusche, die durch einen nicht exakt ausgewuchteten Motor beziehungsweise ein nicht exakt ausgewuchtetes Lüfterrad 17 induziert werden, nicht auf das Gehäuse 12 und umgebende Bauteile oder Möbelstücke abgegeben werden.

## Patentansprüche

1. Luftabsaugvorrichtung (10) umfassend ein Gehäuse (12) mit mindestens einer Wandung (14) und mindestens ein schwingungsinduzierendes Teil (16), wobei die Luftabsaugvorrichtung (10) mindestens einen Schwingungsdämpfer (18) umfasst, der zwischen dem schwingungsinduzierenden Teil (16) und der Wandung (14) anordenbar ist, wobei der mindestens eine Schwingungsdämpfer (18) einen elastomeren Körper (20) umfasst, wobei der Körper (20) eine Mehrzahl von ersten Ausnehmungen (30) und eine Mehrzahl von zweiten Ausnehmungen (36) umfasst, wobei der elastomere Körper (20) einen zylindrischen oder prismatischen Mittelteil (26) und eine Mehrzahl von Ausprägungen (34) aufweist, wobei die Ausprägungen (34) radial außen am Mittelteil (26) auf dessen Mantelfläche (56) angeordnet sind, wobei der Körper (20) zumindest eine erste Seite (22) und eine dieser gegenüberliegende zweite Seite (24) aufweist, wobei zumindest eine Oberfläche (40, 50) des Mittelteils (26) der ersten Seite (22) und der zweiten Seite (24) zu einer Oberfläche (44, 54) zumindest einer Ausprägung (34) der gleichen Seite (22, 24) abgesetzt ist, wobei das Mittelteil (26) die Ausprägungen (34) auf der ersten Seite (22) überragt und die Ausprägungen (34) das Mittelteil (18) auf der zweiten Seite (24) überragen, und wobei in den Ausprägungen (34) die zweiten Ausnehmungen (36) angeordnet sind, wobei die ersten Ausnehmungen (30) zur Aufnahme von ersten Anbindungsmitteln (25) für eine Anbindung an die zumindest eine Wandung (14) und die zweiten Ausnehmungen (26) zur Aufnahme von zweiten Anbindungsmitteln (27) für eine Anbindung an dem schwingungsinduzierenden Teil (16) ausgestaltet sind.

2. Luftabsaugvorrichtung (10) nach Anspruch 1, **dadurch gekennzeichnet, dass** die ersten Ausnehmungen (30) und/oder die zweiten Ausnehmungen (36) im Wesentlichen auf einem ersten Kreisumfang (31) und/oder auf einem zweiten Kreisumfang (37) angeordnet sind.

3. Luftabsaugvorrichtung (10) nach einem oder mehreren der vorhergehenden Ansprüche, **dadurch gekennzeichnet, dass** der Körper (20) genau drei zweite Ausnehmungen aufweist.

4. Luftabsaugvorrichtung (10) nach einem oder mehreren der vorhergehenden Ansprüche, **dadurch gekennzeichnet, dass** Buchsen (32) zumindest teilweise in den ersten Ausnehmungen (30) und/oder in den zweiten Ausnehmungen (36) angeordnet sind.

5. Luftabsaugvorrichtung (10) nach Anspruch 4, **dadurch gekennzeichnet, dass** die Buchsen (32) ein schwingungsdämpfendes Material aufweisen, das zusammen mit dem Material des elastomeren Körpers (20) zusammenwirkt.

6. Luftabsaugvorrichtung (10) nach einem oder mehreren der vorhergehenden Ansprüche, **dadurch gekennzeichnet, dass** das schwingungsinduzierende Teil (16) zumindest einen Motor umfasst.

7. Schwingungsdämpfer (18) zur Verwendung in einer Luftabsaugvorrichtung (10) nach einem oder mehreren der vorhergehenden Ansprüche umfassend einen elastomeren Körper (20), wobei der Körper (20) eine Mehrzahl von ersten Ausnehmungen (30) und eine Mehrzahl von zweiten Ausnehmungen (36) umfasst, wobei der elastomere Körper (20) einen zylindrischen oder prismatischen Mittelteil (26) und eine Mehrzahl von Ausprägungen (34) aufweist, wobei die Ausprägungen (34) radial außen am Mittelteil (26) auf dessen Mantelfläche (56) angeordnet sind, wobei der Körper (20) zumindest eine erste Seite (22) und eine dieser gegenüberliegende zweite Seite (24) aufweist, wobei zumindest eine Oberfläche (40, 50) des Mittelteils (26) der ersten Seite (22) und der zweiten Seite (24) zu einer Oberfläche (44, 54) zumindest einer Ausprägung (34) der gleichen Seite (22, 24) abgesetzt ist wobei das Mittelteil (26) die Ausprägungen (34) auf der ersten Seite (22) überragt und die Ausprägungen (34) das Mittelteil (18) auf der zweiten Seite (24) überragen, und wobei in den Ausprägungen (34) die zweiten Ausnehmungen (36) angeordnet sind, wobei die ersten Ausnehmungen (30) zur Aufnahme von ersten Anbindungsmitteln (25) für eine Anbindung an mindestens eine Wandung (14) ausgestaltet sind und die zweiten Ausnehmungen (36) zur Aufnahme von zweiten Anbindungsmitteln (27) für eine Anbindung an mindestens ein schwingungsinduzierendes Teil (16) ausgestaltet sind.

8. Schwingungsdämpfer (18) nach Anspruch 7, **dadurch gekennzeichnet, dass** Buchsen (32) in den ersten Ausnehmungen (30) und/oder den zweiten Ausnehmungen (36) angeordnet sind.

9. Schwingungsdämpfer (18) nach einem oder mehreren der Ansprüche 7 bis 8, **dadurch gekennzeichnet, dass** die Buchsen (32) ein schwingungsdämpfendes Material aufweisen, das zusammen mit dem Material des elastomeren Körpers (20) zusammenwirkt.

10. Verfahren zur Befestigung eines schwingungsinduzierenden Teils (16) an einer Wandung (14) umfassend
- Bereitstellen eines Schwingungsdämpfers (18) nach einem oder mehreren der Ansprüche Anspruch 7 bis 9,
- Befestigen von ersten Anbindungsmitteln (25) an mindestens einer Wandung (14) eines Gehäuses (12) einer Luftabsaugvorrichtung (10) und in ersten Ausnehmungen (30) des Schwingungsdämpfers (18),
- Befestigen von zweiten Anbindungsmitteln (27) an mindestens einem schwingungsinduzierenden Teil (16) und in zweiten Ausnehmungen (36) des Schwingungsdämpfers (18).

11. Verwendung eines Schwingungsdämpfers (18) nach einem oder mehreren der Ansprüche 7 bis 9 zur Anbindung mindestens eines schwingungsinduzierenden Teils (16) an mindestens einer Wandung (14) eines Gehäuses (12) einer Luftabsaugvorrichtung (10) nach einem oder mehreren der Ansprüche 1 bis 6.

## Claims

1. Air suction device (10) comprising a housing (12) with at least one wall (14) and at least one vibrating part (16), wherein the air suction device (10) comprises at least one vibration damper (18) which can be arranged between the vibrating part (16) and the wall (14), wherein the at least one vibration damper (18) comprises an elastomeric body (20), wherein the body (20) comprises a plurality of first recesses (30) and a plurality of second recesses (36), wherein the elastomeric body (20) has a cylindrical or prismatic middle section (26) and a plurality of protrusions (34), wherein the protrusions (34) are arranged radially outwardly on the middle section (26) on its outer surface (56), wherein the body (20) has at least a first side (22) and a second side (24) opposite thereto, wherein at least one surface (40, 50) of the middle section (26) of the first side (22) and the second side (24) is offset from a surface (44, 54) of at least one protrusion (34) of the same side (22, 24), wherein the middle section (26) protrudes above the protrusions (34) on the first side (22) and the protrusions (34) protrude above the middle section (26) on the second side (24), and wherein the second recesses (36) are arranged in the protrusions (34), wherein the first recesses (30) are formed for receiving first connecting means (25) for connection to the at least one wall (14) and the second recesses (36) for receiving second connecting means (27) for connection to the vibrating part (16).

2. Air suction device (10) according to claim 1, **characterized in that** the first recesses (30) and/or the second recesses (36) are arranged essentially on a first circumference (31) and/or on a second circumference (37).

3. Air suction device (10) according to one or more of the preceding claims, **characterized in that** the body (20) has exactly three second recesses.

4. Air suction device (10) according to one or more of the preceding claims, **characterized in that** bushings (32) are arranged at least partially in the first recesses (30) and/or in the second recesses (36).

5. Air suction device (10) according to claim 4, **characterized in that** the bushings (32) comprise a vibration-damping material that interacts with the material of the elastomeric body (20).

6. Air suction device (10) according to one or more of the preceding claims, **characterized in that** the vibrating part (16) comprises at least one motor.

7. Vibration damper (18) for use in an air suction device (10) according to one or more of the preceding claims, comprising an elastomeric body (20), wherein the body (20) comprises a plurality of first recesses (30) and a plurality of second recesses (36), wherein the elastomeric body (20) having a cylindrical or prismatic middle section (26) and a plurality of protrusions (34), wherein the protrusions (34) are arranged radially outwardly on the middle section (26) on its outer surface (56), wherein the body (20) having at least one first side (22) and a second side (24) located opposite thereto, wherein at least one surface (40, 50) of the middle section (26) of the first side (22) and the second side (24) is offset from a surface (44, 54) of at least one protrusion (34) of the same side (22, 24), wherein the middle section (26) protrudes beyond the protrusions (34) on the first side (22) and the protrusions (34) protrude beyond the middle section (26) on the second side (24), and wherein the second recesses (36) are arranged in the protrusions (34), wherein the first recesses (30) are formed to accommodate first connecting means (25) for connection to at least one wall (14) and the second recesses (36) are developed to accommodate second connecting means (27) for connection to at least one vibrating part (16).

8. Vibration damper (18) according to claim 7, **characterized in that** bushings (32) are arranged in the first recesses (30) and/or the second recesses (36).

9. Vibration damper (18) according to one or more of claims 7 to 8, **characterized in that** the bushings (32) comprise a vibration-damping material that interacts with the material of the elastomeric body (20).

10. Method for attaching a vibrating part (16) to a wall (14), comprising
- providing a vibration damper (18) according to one or more of claims 7 to 9,
- fastening first connecting means (25) to at least one wall (14) of a housing (12) of an air suction device (10) and in first recesses (30) of the vibration damper (18),
- fastening second connecting means (27) to at least one vibrating part (16) and in second recesses (36) of the vibration damper (18).

11. Use of a vibration damper (18) according to one or more of claims 7 to 9 for connecting at least one vibrating part (16) to at least one wall (14) of a housing (12) of an air suction device (10) according to one or more of claims 1 to 6.

## Revendications

1. Dispositif d'aspiration d'air (10) comprenant un boîtier (12) ayant au moins une paroi (14) et au moins une pièce induisant des vibrations (16), le dispositif d'aspiration d'air (10) comprenant au moins un amortisseur de vibrations (18) qui peut être disposé entre la pièce induisant des vibrations (16) et la paroi (14), le au moins un amortisseur de vibrations (18) comprenant un corps en élastomère (20), le corps (20) comprenant une pluralité de premières cavités (30) et une pluralité de deuxièmes cavités (36), le corps élastomère (20) présentant une partie centrale cylindrique ou prismatique (26) et une pluralité de protubérances (34), les protubérances (34) étant disposées radialement à l'extérieur sur la partie centrale (26) sur sa surface d'enveloppe (56), le corps (20) présentant au moins un premier côté (22) et un deuxième côté (24) opposé à celui-ci, au moins une surface (40, 50) de la partie centrale (26) du premier côté (22) et du deuxième côté (24) étant décalée par rapport à une surface (44, 54) d'au moins une protubérance (34) du même côté (22, 24), la partie centrale (26) dépassant des protubérances (34) sur le premier côté (22) et les protubérances (34) dépassant de la partie centrale (26) sur le deuxième côté (24), et les deuxièmes cavités (36) étant disposées dans les protubérances (34), les premières cavités (30) étant conçues pour recevoir des premiers moyens de fixation (25) pour une fixation à la au moins une paroi (14) et les deuxièmes cavités (36) étant conçues pour recevoir des deuxièmes moyens de fixation (27) pour une fixation à la pièce induisant des vibrations (16).

2. Dispositif d'aspiration d'air (10) selon la revendication 1, **caractérisé en ce que** les premières cavités (30) et/ou les deuxièmes cavités (36) sont disposées essentiellement sur une première circonférence (31) et/ou sur une seconde circonférence (37).

3. Dispositif d'aspiration d'air (10) selon une ou plusieurs des revendications précédentes, **caractérisé en ce que** le corps (20) comporte exactement trois deuxièmes cavités.

4. Dispositif d'aspiration d'air (10) selon une ou plusieurs des revendications précédentes, **caractérisé en ce que** des douilles (32) sont disposées au moins en partie dans les premières cavités (30) et/ou dans les deuxièmes cavités (36).

5. Dispositif d'aspiration d'air (10) selon la revendication 4, **caractérisé en ce que** les douilles (32) comportent un matériau amortissant les vibrations qui coopère avec le matériau du corps en élastomère (20).

6. Dispositif d'aspiration d'air (10) selon une ou plusieurs des revendications précédentes, **caractérisé en ce que** la pièce induisant des vibrations (16) comprend au moins un moteur.

7. Amortisseur de vibrations (18) destiné à être utilisé dans un dispositif d'aspiration d'air (10) selon une ou plusieurs des revendications précédentes, comprenant un corps en élastomère (20), le corps (20) comprenant une pluralité de premières cavités (30) et une pluralité de deuxièmes cavités (36), le corps en élastomère (20) comportant une partie centrale cylindrique ou prismatique (26) et une pluralité de protubérances (34), les protubérances (34) étant disposées radialement à l'extérieur de la partie centrale (26) sur sa surface d'enveloppe (56), le corps (20) présentant au moins un premier côté (22) et un deuxième côté (24) opposé à celui-ci, au moins une surface (40, 50) de la partie centrale (26) du premier côté (22) et du deuxième côté (24) étant décalée par rapport à une surface (44, 54) d'au moins une protubérance (34) du même côté (22, 24), la partie centrale (26) dépassant des protubérances (34) sur le premier côté (22) et les protubérances (34) dépassant de la partie centrale (26) sur le deuxième côté (24), et les deuxièmes cavités (36) étant disposées dans les protubérances (34), les premières cavités (30) étant conçues pour recevoir des premiers moyens de fixation (25) destinés à une fixation sur au moins une paroi (14) et les deuxièmes cavités (36) étant conçues pour recevoir des seconds moyens de fixation (27) pour une fixation à au moins une pièce induisant des vibrations (16).

8. Amortisseur de vibrations (18) selon la revendication 7, **caractérisé en ce que** des douilles (32) sont disposées dans les premières cavités (30) et/ou les deuxièmes cavités (36).

9. Amortisseur de vibrations (18) selon une ou plusieurs des revendications 7 à 8, **caractérisé en ce que** les douilles (32) comportent un matériau amortissant les vibrations qui coopère avec le matériau du corps en élastomère (20).

10. Procédé de fixation d'une pièce induisant des vibrations (16) sur une paroi (14), comprenant
- la fourniture d'un amortisseur de vibrations (18) selon une ou plusieurs des revendications 7 à 9,
- la fixation de premiers moyens de fixation (25) sur au moins une paroi (14) d'un boîtier (12) d'un dispositif d'aspiration d'air (10) et dans des premières cavités (30) de l'amortisseur de vibrations (18),
- la fixation de seconds moyens de fixation (27) sur au moins une pièce induisant des vibrations (16) et dans des deuxièmes cavités (36) de l'amortisseur de vibrations (18).

11. Utilisation d'un amortisseur de vibrations (18) selon une ou plusieurs des revendications 7 à 9 pour fixer au moins une pièce induisant des vibrations (16) sur au moins une paroi (14) d'un boîtier (12) d'un dispositif d'aspiration d'air (10) selon une ou plusieurs des revendications 1 à 6.
